# EUROPEAN PATENT SPECIFICATION

(11) **EP 2 597 231 B1**
(45) Date of publication and mention of the grant of the patent: **09.04.2014**
(21) Application number: 12187714.6
(22) Date of filing: 09.10.2012
(51) Int. Cl.: E05B 17/14, B62H 5/06

(54) **Arrangement of anti-burglary magnet lock of motorcycle**
Anordnung für ein Diebstahlschutzmagnetschloss eines Motorrads
Agencement de serrure à aimant antivol de motocyclette

(30) Priority: 22.11.2011 TW 100142680
(43) Date of publication of application: 29.05.2013
(73) Proprietor: Kwang Yang Motor Co., Ltd., Kaohsiung City 80794 (TW)
(72) Inventor: Tu, Shih-Wang, Cambridge, CB1 1AH (GB); Yu, Chien-Chih, Cambridge, CB1 1AH (GB)
(74) Representative: Horak, Michael

(56) References cited:
- JP-A- 2002 061 437
- JP-A- 2004 001 642
- JP-A- 2004 217 044
- US-A- 5 718 137

## Description

### (a) Technical Field of the Invention

The present invention generally relates to an arrangement of anti-burglary magnet lock of motorcycle, and more particularly to an arrangement of anti-burglary magnet lock of motorcycle that provides the motorcycle with more than one anti-burglary measures so as to improve the resistance of the motorcycle against burglary.

### (b) Description of the Prior Art

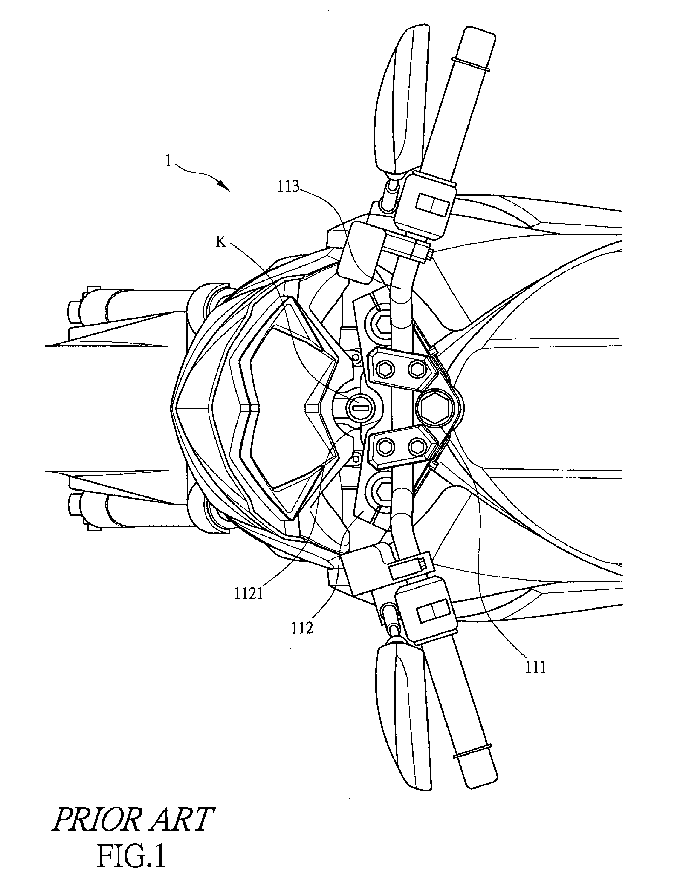

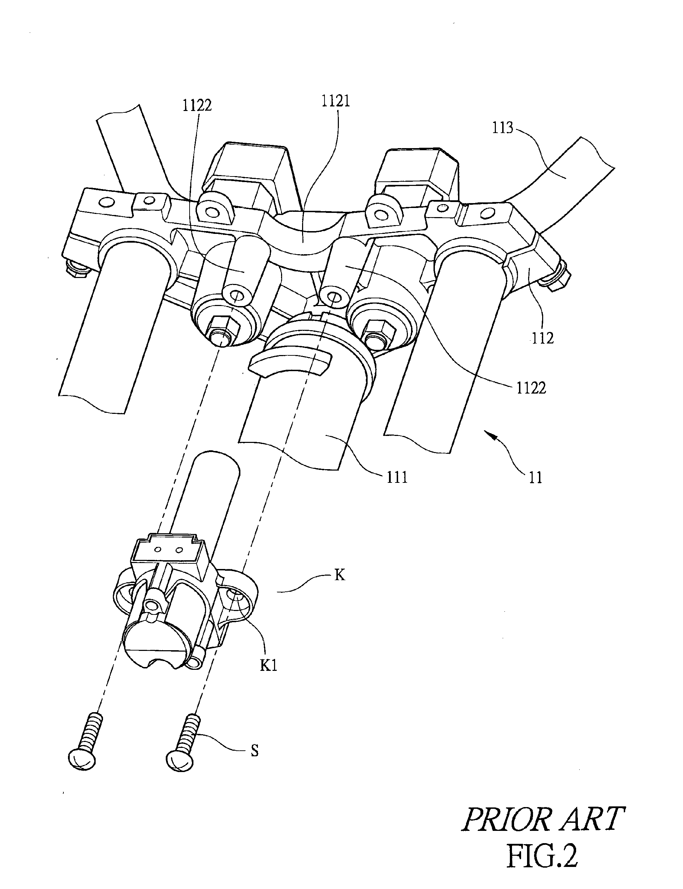

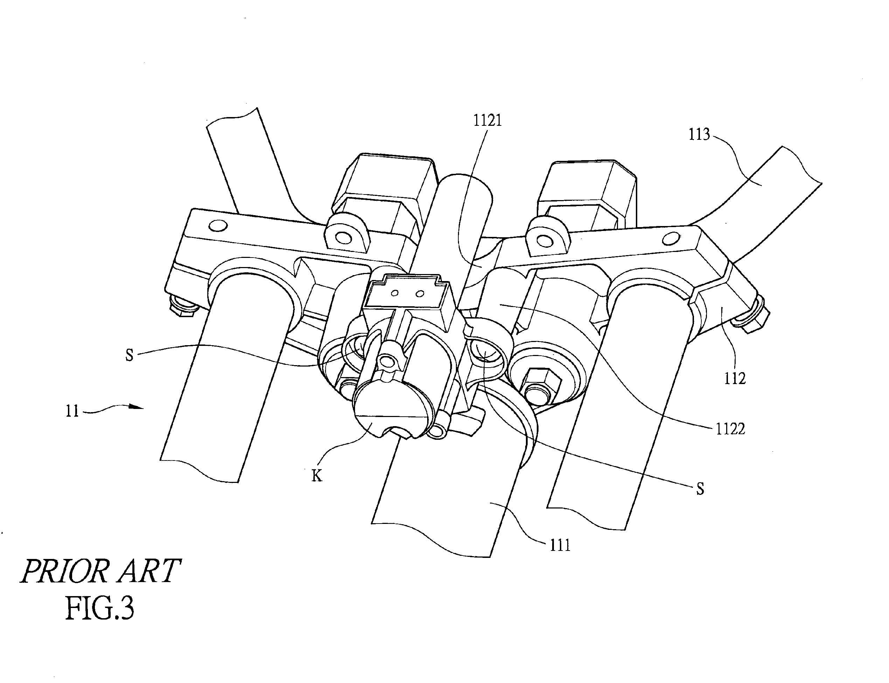

As shown in Figure 1, beside an external lock, an anti-burglary measure for a motorcycle 1 is generally realized with a main switch lock K of the motorcycle 1 that locks up a steering handlebar to achieve the purpose of burglary protection. Also referring to Figures 2 and 3, the motorcycle 1 comprises an upper connection plate 112 mounted above a head tube 111 of a frame unit 11. The steering handlebar 113 is rotatably mounted on the upper connection plate 112. The upper connection plate 112 forms a recess 1121 in a direction toward the front side of the motorcycle. The recess 1121 has two sides from which two fixing bars 1122 project downward. The main switch lock K is fixed by having threaded fasteners S received through fixing holes K1 formed on two sides of the main switch lock K and then screwed into the fixing bars 1122, so as to securely mount the main switch lock K to the upper connection plate 112 in such a way that the main switch lock K is accommodated in the recess 1121 of the upper connection plate 112. Referring again to FIG. 1, a rider may insert a key (not shown) that agrees with the main switch lock K into the main switch lock K and rotate the main switch lock K to selectively set the motorcycle 1 to ON state for riding or LOCK state for parking and securing the motorcycle against burglary.

However, it is known that the main switch lock K of the motorcycle 1 is generally arranged in such a manner as to be completely exposed. Further, the main switch lock K can be simply operated with a key. This often leads to easy burglary or theft due to the insufficient capability of resisting burglary provided by the main switch lock K of the motorcycle 1. Consequently, the ownership of the motorcycle 1 is severely threatened by burglary.

JP 2004 001642 A discloses an arrangement of anti-burglary magnet lock of motorcycle, wherein the motorcycle at least comprises a steering unit, a frame unit, a power unit, and a saddle in which the frame unit at least comprises a head tube and the steering unit comprises a steering handlebar, an upper connection plate, and a lower connection plate, wherein in that the upper connection plate has a front end to which a lock holder is mounted, the lock holder forming through holes, the through holes being arranged to fix a magnet lock so as to mount the magnet lock on the lock holder, the through holes being shielded by an outer wall of the lock holder, a main switch lock being arranged under the lock holder in such a way that the magnet lock shields a lock core of the main switch lock. However, the lock holder is separate from the upper connection plate and is attached to the upper connection plate by means of additional parts.

### SUMMARY OF THE INVENTION

The primary object of the present invention is to provide an arrangement of anti-burglary magnet lock of motorcycle. The motorcycle at least comprises a steering unit, a frame unit, a power unit, and a saddle, wherein the frame unit at least comprises a head tube and the steering unit comprises a steering handlebar, an upper connection plate, and a lower connection plate. The features are that the upper connection plate has a front end to which a lock holder is mounted. The lock holder forms through holes. The through holes are arranged to fix a magnet lock. The lock holder comprises a raised ring. The raised ring has an inside bottom that forms a carrying receptacle and a bore. The through holes of the lock holder are formed in the carrying receptacle of the lock holder. The carrying receptacle and a top face of the upper connection plate are substantially horizontal. The raised ring of the lock holder is formed by being raised from a top face of the upper connection plate, whereby the magnet lock is securely fixed on the lock holder. The through holes are shielded by an outer wall of the lock holder. A main switch lock is arranged under the lock holder in such a way that the magnet lock shields a lock core of the main switch lock. The upper connection plate (32) has a front end to which a mounting bracket (36) is attached. The mounting bracket (36) receives a headlight (37) and a dashboard (38) to mount thereto in such a way that the mounting bracket (36), the headlight (37), and the dashboard (3 8) completely shield a front side of the lock holder. In this way, the magnet lock functions a first line of defense against burglary and the main switch lock serves as a second line of defense against burglary, whereby the capability of resisting burglary of the motorcycle is improved.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a schematic view illustrating a conventional arrangement of a main switch lock of a motorcycle.
FIGS. 2 and 3 are schematic views illustrating assembling of the conventional main switch lock of motorcycle.
FIG. 4 is a side elevational view of a motorcycle according to the present invention.
FIG. 5 is a perspective view showing an upper connection plate and a mounting bracket according to the present invention.
FIG. 6 is a perspective view showing the upper connection plate according to the present invention.
FIG. 7 is a perspective view illustrating the upper connection plate, a magnet lock, and a main switch lock according to the present invention in an exploded form.
FIG. 8 is a perspective view illustrating the upper connection plate, a magnet lock, and a main switch lock according to the present invention in an assembled form.
FIG. 9 shows an embodiment of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

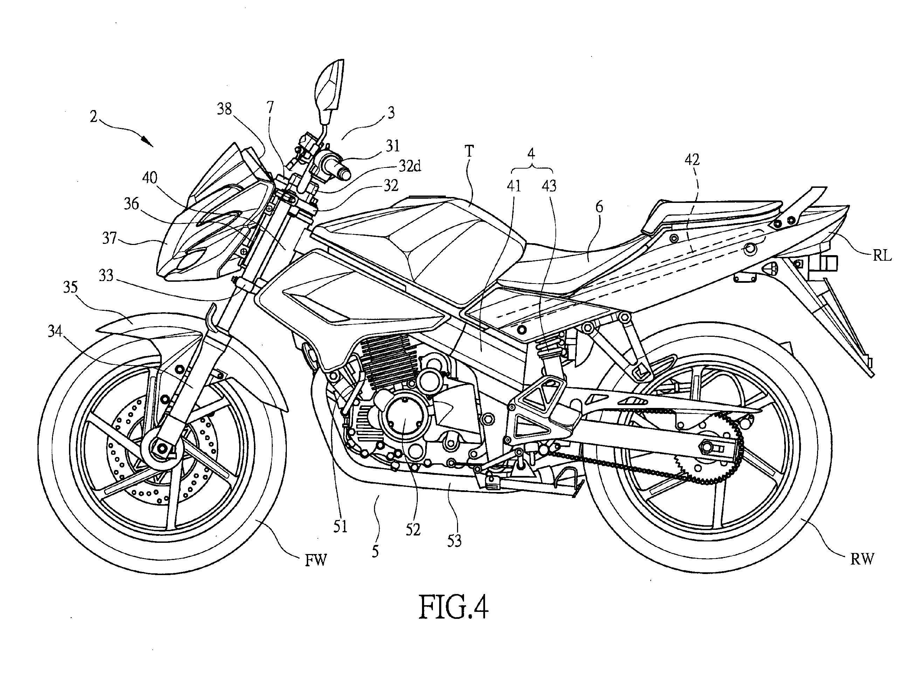

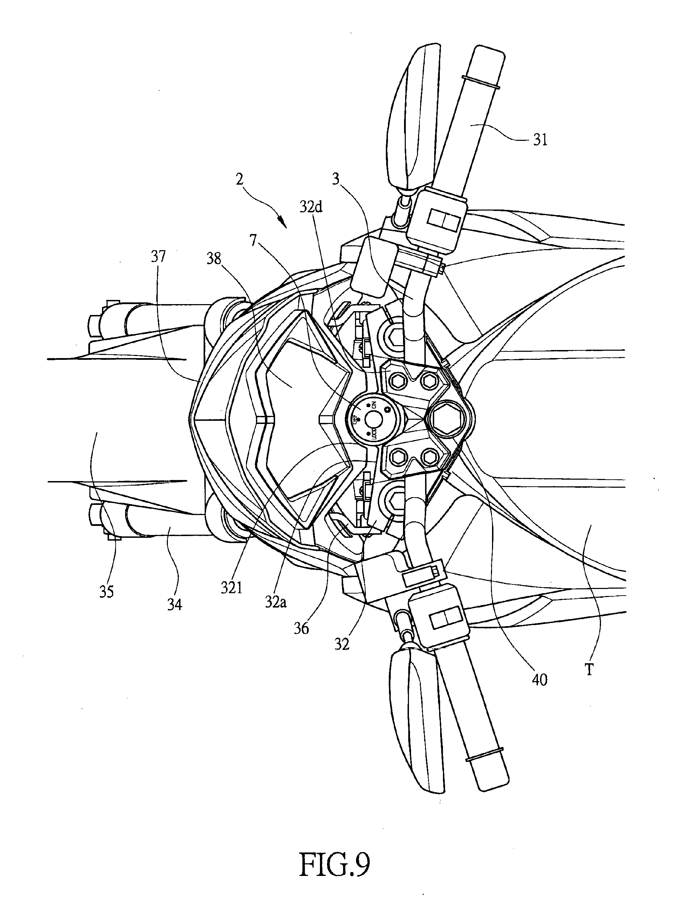

Referring first to FIGS. 4 and 9, a side elevational view of a motorcycle 2 according to the present invention is schematically illustrated. The motorcycle 2 at least comprises a steering unit 3, a frame unit 4, a power unit 5, and a saddle 6.

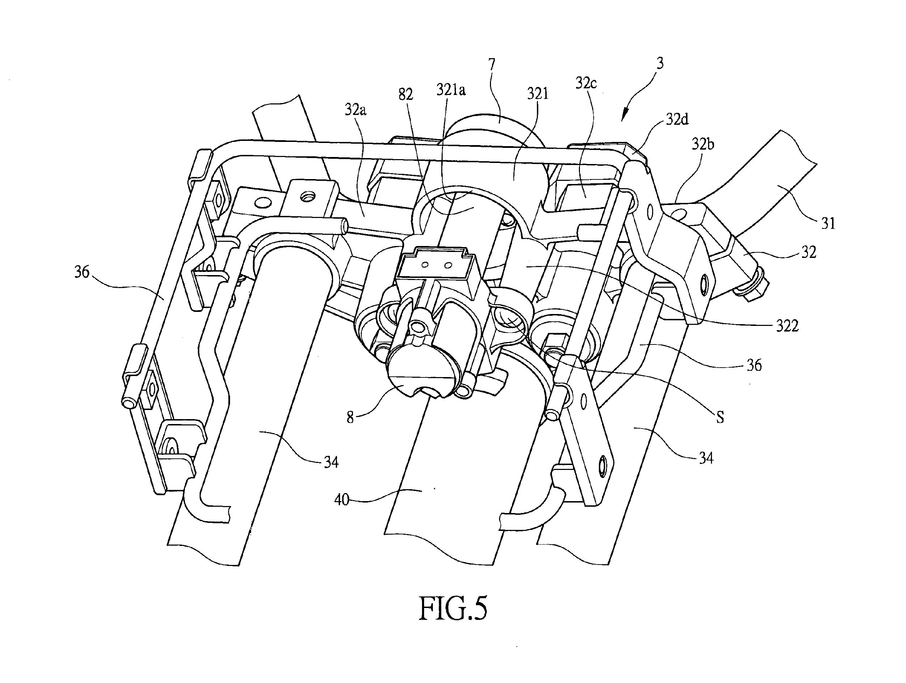

The steering unit 3 comprises a steering handlebar 31, an upper connection plate 32, and a lower connection plate 33. The upper connection plate 32 is arranged above a head tube 40 of the frame 4, while the lower connection plate 33 is located below the head tube 40 of the frame 4. The upper connection plate 32 comprises and carries a steering handlebar retention seat 32c and a steering handlebar retention cover 32d. The steering handlebar retention cover 32d is preferably integrally formed. The steering handlebar retention seat 32c and the steering handlebar retention cover 32d fix the steering handlebar 31 to the upper connection plate 32. The upper connection plate 32 and the lower connection plate 33 are connected to a front shock absorber 34. A lower end of the front shock absorber 34 is supported by a front wheel FW. The front wheel FW is provided on a top side thereof with a front fender 35. Referring to FIG. 5, the upper connection plate 32 has a front end (in a direction toward front side of the motorcycle) to which a mounting bracket 36 is mounted. The mounting bracket 36 comprises a headlight 37 and a dashboard 38 mounted thereto.

The frame unit 4 at least comprises a primary tube section 41 that extends rearward from the head tube 40 and inclines downward and a rear tube section 42. Suspended under the primary tube section 41 is the power unit 5 and mounted above the primary tube section 41 is a fuel tank T. Further, the primary tube section 41 has a rear end to which a rear shock absorber 43 and a rear wheel RW are mounted. The saddle 6 is arranged on the rear tube section 42.

The power unit 5 at least comprises an engine 51, a crankshaft transmission section 52, and an exhaust pipe 53.

The saddle 6 comprises a seat cushion, which has a bottom that forms a cushion shell made of a relatively rigid material and a top that comprises a soft material enclosed by a decoration layer in order to provide a rider with comfortable sitting thereon.

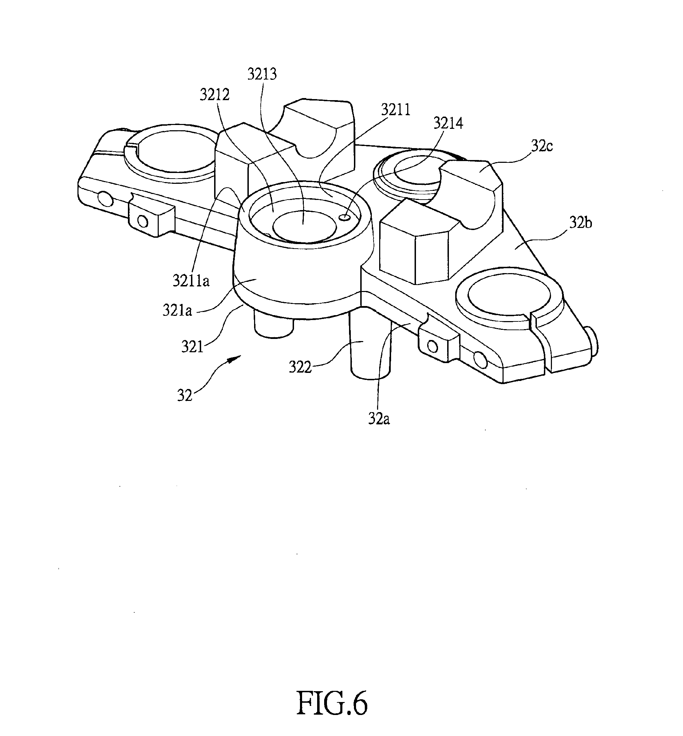

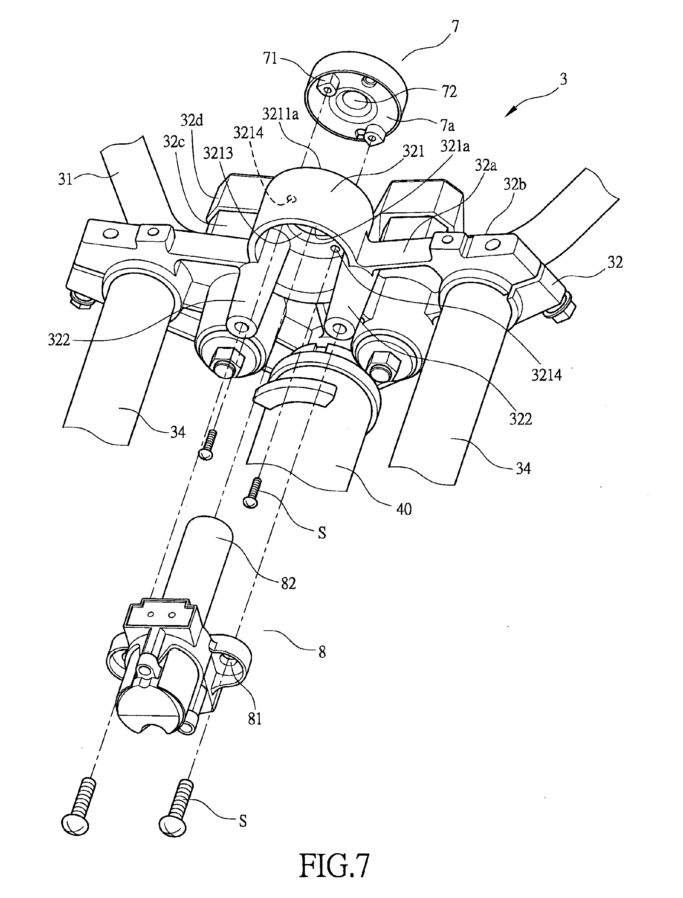

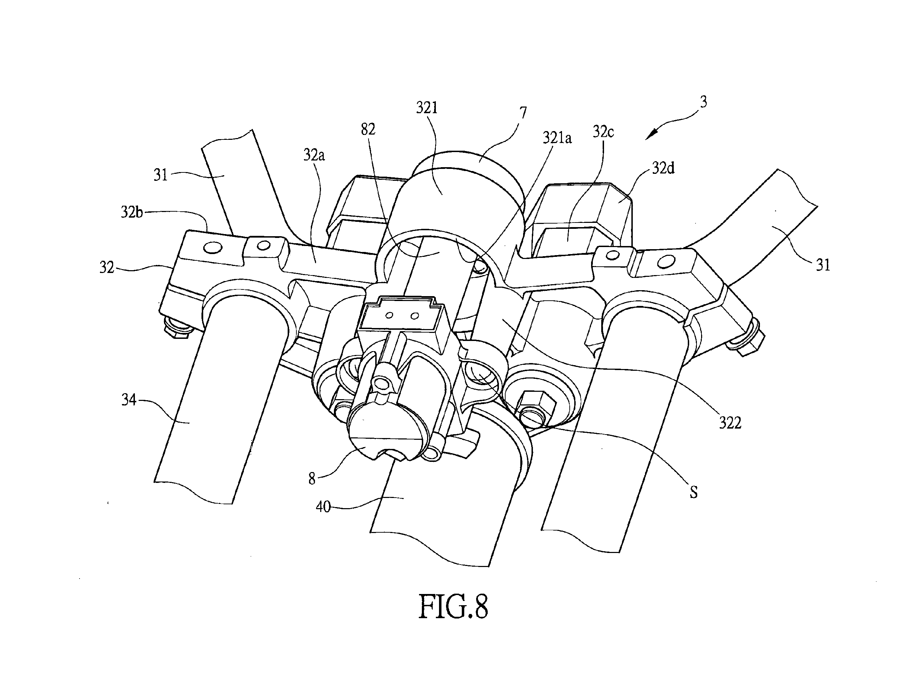

Referring to FIGS. 6, 7, 8, and 9, the features of the present invention are as follows. The upper connection plate 32 has a front end 32a that is provided with a lock holder 321 set in a direction toward the front side of the motorcycle. The lock holder 321 comprises a hollow raised ring 3211 that is raised upward from a top face 32b of the upper connection plate 32. An inside bottom of the raised ring 3211 and the top face 32b of the upper connection plate 32 are substantially horizontal. With such an arrangement, the raised ring 3211 forms therein a carrying receptacle 3212. A bore 3213 is formed through a central portion of the carrying receptacle 3212. Further, the carrying receptacle 3212 comprises two through holes 3214 formed in a circumferential margin of the bore 3213. The two through holes 3214 are shielded by an outer wall 321 a of the lock holder 321. A pair of fixing bars 322 is formed to project downward from two side portions of an underside of the lock holder 321.

The raised ring 3211 that is arranged on the top side of the lock holder 321 functions to receive and fix the magnet lock 7. The through holes 3214 of the carrying receptacle 3212 of the raised ring 3211 are set to correspond to threaded fastening sections 71 provided under the magnet lock 7. Further, the carrying receptacle 3212 of the raised ring 3211 has a depth that is set to correspond to height of the threaded fastening sections 71 on the underside of the magnet lock 7. As such, the threaded fastening sections 71 of the magnet lock 7 are positionable on the carrying receptacle 3212 of the raised ring 3211 in such a way that an undersurface 7a of the magnet lock 7 is exactly positioned on a top face 3211a of the raised ring 3211. Under this condition, the threaded fasteners S are receivable from the underside of the lock holder 321, in an upward direction, through the through holes 3214 defined in the carrying receptacle 3212 of the raised ring 3211 to be screwed into the threaded fastening sections 71 on the underside of the magnet lock 7 to thereby fix and position the magnet lock 7 on the lock holder 321. Further, since the two through holes 3214 are shielded by the outer wall 321 a of the lock holder 321, the potential risk that the magnet lock 7 is easily detached can be eliminated and also, a lock hole 72 of the magnet lock 7 can be set in alignment with and communicating with the bore 3213 defined in the carrying receptacle 3212 of the raised ring 3211.

The fixing bars 322 that are provided on opposite side portions of the underside of the lock holder 321 is arranged to receive a main switch lock 8 to mount thereto. The main switch lock 8 is fixed by having threaded fasteners S received through fixing holes 81 of the main switch lock 8 and screwed into the fixing bars 322 located on the two sides of the underside of the lock holder 321, whereby the main switch lock 8 is securely screwed and fixed under the lock holder 321 in such a way that a lock core 82 of the main switch lock 8 is exactly located under the bore 3213 of the raised ring 3211 of the lock holder 321. In other words, the lock core 82 of the main switch lock 8, the bore 3213 of the lock holder 321, and the lock hole 72 of the magnet lock 7 are set in line with and thus in registration with each other. This means that the lock core 82 of the main switch lock 8 is shielded by the magnet lock 7. With this arrangement, to unlock the main switch lock 8 of the motorcycle 2 according to the present invention, the magnet lock 7 must be unlocked first to allow the lock core 82 of the main switch lock 8 to expose in the lock hole 72 of the magnet lock 7 and a key (not shown) can be used to operate and unlock the main switch lock 8. In this way, capability of resisting burglary of the motorcycle 2 can be improved.

The efficacy of the present invention is that a lock holder 321 is provided, in a direction toward a front side of the motorcycle, on a front end 32a of an upper connection plate 32 so that the lock holder 321 can receive a magnet lock 7 to mount thereof The lock holder 321 allows a main switch lock 8 to be fixed on an underside thereof so that he magnet lock 7 shields the main switch lock 8. This makes the magnet lock 7 a first defense line against burglary of the motorcycle 2 and the main switch lock 8 serves as a second line of defense against burglary. In this way, the capability of resisting burglary of the motorcycle 2 is improved.

Further, the upper connection plate 32 comprises a mounting bracket 36 mounted to a front end thereof and the mounting bracket 36 receives a headlight 37 and a dashboard 38 mounted thereto. With the mounting bracket 36, the headlight 37, and the dashboard 38 so arranged, they can completely shield the front side of the lock holder 321 so as to protect the magnet lock 7 and the main switch lock 8 from being damaged, whereby the capability of resisting burglary of the motorcycle 2 is further improved.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the scope of the present invention.

## Claims

1. An arrangement of anti-burglary magnet lock of motorcycle, wherein the motorcycle at least comprises a steering unit (3), a frame unit (4), a power unit (5), and a saddle (6) in which the frame unit (4) at least comprises a head tube (40) and the steering unit (3) comprises a steering handlebar (31), an upper connection plate (32), and a lower connection plate (33), **characterized in that** the upper connection plate (32) has a front end (32a) to which a lock holder (321) is mounted, the lock holder (321) forming through holes (3214), the through holes (3214) being arranged to fix a magnet lock (7), the lock holder (321) comprising a raised ring (3211), the raised ring (3211) having an inside bottom that forms a carrying receptacle (3212) and a bore (3213), the through holes (3214) of the lock holder (321) being formed in the carrying receptacle (3212) of the lock holder (321), the carrying receptacle (3212) and a top face (32b) of the upper connection plate (32) being substantially horizontal, the raised ring (3211) of the lock holder (321) being formed by being raised from a top face (32b) of the upper connection plate (32), whereby the magnet lock (7) is securely fixed on the lock holder (321), the through holes (3214) being shielded by an outer wall (321a) of the lock holder (321), a main switch lock (8) being arranged under the lock holder (321) in such a way that the magnet lock (7) shields a lock core (82) of the main switch lock (8), the upper connection plate (32) having a front end to which a mounting bracket (36) is attached, the mounting bracket (36) receiving a headlight (37) and a dashboard (38) to mount thereto in such a way that the mounting bracket (36), the headlight (37), and the dashboard (38) completely shield a front side of the lock holder (321).

2. The arrangement of anti-burglary magnet lock of motorcycle according to claim 1, wherein the upper connection plate (32) comprises a steering handlebar retention seat (32c) and a steering handlebar retention cover (32d) mounted thereto, the steering handlebar retention cover (32d) being integrally formed.

3. The arrangement of anti-burglary magnet lock of motorcycle according to claim 1, wherein the lock holder (321) has an undersurface having opposite side portions from which a pair of the fixing bars (322) respectively project downward.

4. The arrangement of anti-burglary magnet lock of motorcycle according to claim 3, wherein the fixing bars (322) are arranged to receive the main switch lock (8) to mount thereto.

5. The arrangement of anti-burglary magnet lock of motorcycle according to claim 1, wherein the magnet lock (7) comprises threaded fastening sections (71) and a lock hole (72), the threaded fastening sections (71) being arranged to correspond to the through holes (3214) of the lock holder (321), the threaded fastening sections (71) being positionable on the carrying receptacle (3212) of the lock holder (321), the lock hole (72) being arranged to correspond to a bore (3213) of the lock holder (321), the magnet lock (7) having an undersurface (7a) positionable on a top face (32b) of the raised ring (3211) of the lock holder (321).

6. The arrangement of anti-burglary magnet lock of motorcycle according to claim 1, wherein the magnet lock (7) and the main switch lock (8) are mounted to the lock holder (321) in such a way that a lock hole (72) of the magnet lock (7), a bore (3213) of the lock holder (321), and the lock core (82) of the main switch lock (8) are set in line with each other.

## Patentansprüche

1. Vorrichtung für ein Diebstahlsschutzmagnetschloss eines Motorrads, wobei das Motorrad mindestens eine Lenkeinheit (3), eine Rahmeneinheit (4), eine Antriebseinheit (5) und einen Sattel (6) umfasst, wobei die Rahmeneinheit (4) mindestens ein Steuerrohr (40) umfasst und die Lenkeinheit (3) eine Lenkstange (31), eine obere Verbindungsplatte (32) und eine untere Verbindungsplatte (33) umfasst, **gekennzeichnet dadurch, dass** die obere Verbindungsplatte (32) ein Vorderende (32a) hat, an das ein Schlosshalter (321) montiert wird, wobei der Schlosshalter (321) Durchgangsbohrungen (3214) bildet, wobei die Durchgangsbohrungen (3214) angeordnet sind, um ein Magnetschloss (7) zu befestigen, wobei der Schlosshalter (321) einen erhobenen Ring (3211) umfasst, wobei der erhobene Ring (3211) einen Innenboden umfasst, der einen Tragebehälter (3212) und eine Bohrung (3213) bildet, wobei die Durchgangsbohrungen (3214) des Schlosshalters (321) in dem Tragebehälter (3212) des Schlosshalters (321) gebildet sind, wobei der Tragebehälter (3212) und eine Oberseite (32b) der oberen Verbindungsplatte (32) im wesentlichen waagrecht sind, wobei der erhobene Ring (3211) des Schlosshalters (321) gebildet wird, indem er von einer Oberseite (32b) der oberen Verbindungsplatte (32) angehoben wird, wodurch das Magnetschloss (7) sicher auf dem Schlosshalter (321) befestigt ist, wobei die Durchgangsbohrungen (3214) von einer Außenwand (321a) des Schlosshalters (321) abgeschirmt werden, wobei ein Haupt-Schaltschloss (8) unter dem Verschlusshalter (321) derart angeordnet ist, dass das Magnetschloss (7) einen Schließzylinder (82) des Haupt-Schaltschlosses (8) abschirmt, wobei die obere Korrekturplatte (32) ein Vorderende aufweist, an dem ein Montagebügel (36) angebracht ist, wobei der Montagebügel (36) einen Scheinwerfers (37) und ein Armaturenbrett (38) aufnimmt, die derart daran zu montieren sind, dass der Montagebügel (36), der Scheinwerfer (37) und das Armaturenbrett (38) eine Vorderseite des Schlosshalters (321) vollständig abschirmen.

2. Vorrichtung für ein Diebstahlsschutzmagnetschloss eines Motorrads nach Anspruch **1,** wobei die obere Verbindungsplatte (32) einen Lenkstangenhaltesitz (32c) und einen Lenkstangensicherungsdeckel (32d) umfasst, die daran montiert sind, wobei der Lenkstangensicherungsdeckel (32d) einstückig ist.

3. Vorrichtung für ein Diebstahlsschutzmagnetschloss eines Motorrads nach Anspruch **1,** wobei der Schlosshalter (321) eine Unterfläche mit einander gegenüberliegenden Seitenteilen aufweist, von welchen je ein Paar der Befestigungsstangen (322) nach unten ragt.

4. Vorrichtung für ein Diebstahlsschutzmagnetschloss eines Motorrads nach Anspruch 3, wobei die Befestigungsstangen (322) angeordnet sind, um das Haupt-Schaltschloss (8) aufzunehmen, das daran zu montieren ist.

5. Vorrichtung für ein Diebstahlsschutzmagnetschloss eines Motorrads nach Anspruch **1,** wobei das Magnetschloss (7) Gewindebefestigungsabschnitte (71) und ein Verschlussloch (72) umfasst, wobei die Gewindebefestigungsabschnitte (71) angeordnet sind, um den Durchgangsbohrungen (3214) des Schlosshalters (321) zu entsprechen, wobei die Gewindebefestigungsabschnitte (71) auf dem Tragebehälter (3212) des Schlosshalters (321) positionierbar sind, wobei das Verschlussloch (72) angeordnet ist, um einer Bohrung (3213) des Schlosshalters (321) zu entsprechen, wobei das Magnetschloss (7) eine Unterfläche (7a) umfasst, die auf einer Oberseite (32b) des erhobenen Ringes (3211) des Schlosshalters (321) positionierbar ist.

6. Vorrichtung für ein Diebstahlsschutzmagnetschloss eines Motorrads nach Anspruch 1, wobei das Magnetschloss (7) und das Haupt-Schaltschloss (8) derart an den Schlosshalter (321) montiert werden, dass ein Verschlussloch (72) des Magnetschloss (7), eine Bohrung (3213) des Schlosshalters (321) und der Schließzylinder (82) des Haupt-Schaltschloss (8) aufeinander ausgerichtet sind.

## Revendications

1. Dispositif de serrure antivol à aimant pour motocyclette, où la motocyclette comprend au moins une unité de direction (3), une unité châssis (4), un moteur (5) et une selle (6), où l'unité châssis (4) comprend au moins un tube de direction (40), et l'unité de direction (3) comprend un guidon de direction (31), une plaque de connexion supérieure (32) et une plaque de connexion inférieure (33), **caractérisé en ce que** la plaque de connexion supérieure (32) a une extrémité antérieure (32a) à laquelle un support de serrure (321) est monté, le support de serrure (321) formant des trous de passage (3214), les trous de passage (3214) étant disposés pour fixer une serrure magnétique (7), le support de serrure (321) comprenant un anneau soulevé (3211), l'anneau soulevé (3211) ayant un fond intérieur qui forme un récipient de transport (3212) et un trou (3213), les trous de passage (3214) du support de serrure (321) étant formés dans le récipient de transport (3212) du support de serrure (321), le récipient de transport (3212) et une face supérieure (32b) de la plaque de connexion supérieure (32) étant essentiellement horizontaux, l'anneau soulevé (3211) du support de serrure (321) étant formé en étant soulevé d'une face supérieure (32b) de la plaque de connexion supérieure (32), de manière que la serrure à aimant (7) soit solidement fixée sur le support de serrure (321), les trous de passage (3214) étant masqués par une paroi extérieure (321a) du support de serrure (321), un interrupteur de verrouillage général (8) étant disposé sous le support de serrure (321) de façon à ce que la serrure à aimant (7) masque un barillet (82) de l'interrupteur de verrouillage général (8), la plaque de correction supérieure (32) ayant une extrémité antérieure à laquelle un support de fixation (36) est attaché, le support de fixation (36) recevant un phare (37) et un tableau de bord (38) à monter de façon à ce que le support de fixation (36), le phare (37) et le tableau de bord (38) masquent complètement une face avant du support de serrure (321).

2. Dispositif de serrure antivol à aimant pour motocyclette selon la revendication 1, où la plaque de connexion supérieure (32) comprend un logement de maintien du guidon de direction (32c) et une couverture de maintien du guidon de direction (32d) montée sur ce dernier, la couverture de maintien du guidon de direction (32d) étant formée intégralement.

3. Dispositif de serrure antivol à aimant pour motocyclette selon la revendication 1, où le support de serrure (321) a une face inférieure ayant des parties latérales opposées d'où une paire de barres de fixation (322) dépassent respectivement vers le bas.

4. Dispositif de serrure antivol à aimant pour motocyclette selon la revendication 3, où les barres de fixation (322) sont disposées pour recevoir l'interrupteur de verrouillage général (8) à monter sur celles-ci.

5. Dispositif de serrure antivol à aimant pour motocyclette selon la revendication 1, où la serrure à aimant (7) comprend des sections de fixation filetées (71) et un trou de serrure (72), les sections de fixation filetées (71) étant prédisposées pour correspondre aux trous de passage (3214) du support de serrure (321), les sections de fixation filetées (71) étant positionnables sur le récipient de transport (3212) du support de serrure (321), le trou de serrure (72) étant prédisposé pour correspondre à un trou (3213) du support de serrure (321), la serrure à aimant (7) ayant une face inférieure (7a) positionnable sur une face supérieure (32b) de l'anneau soulevé (3211) du support de serrure (321).

6. Dispositif de serrure antivol à aimant pour motocyclette selon la revendication 1, où la serrure à aimant (7) et l'interrupteur de verrouillage général (8) sont montés sur le support de serrure (321) de façon à ce qu'un trou de serrure (72) de la serrure à aimant (7), un trou (3213) du support de serrure (321) et le barillet (82) de l'interrupteur de verrouillage général (8) sont disposés en ligne entre eux.
